# EUROPEAN PATENT APPLICATION

(11) **EP 4 693 340 A1**
(43) Date of publication of application: **11.02.2026**
(21) Application number: 24779933.1
(22) Date of filing: 22.03.2024
(51) Int. Cl.: H01B 1/06, H01B 1/10, H01M 4/13, H01M 4/139, H01M 4/62, H01M 10/052, H01M 10/0562

(54) **SOLID ELECTROLYTE AND METHOD FOR PRODUCING SAME**

(30) Priority: 28.03.2023 JP 2023052251
(71) Applicant: Mitsui Kinzoku Company, Limited, Tokyo (JP)
(72) Inventor: SEKINE, Kyohei, Ageo-shi, Saitama 362-0021 (JP); NAKAYAMA, Yuki, Ageo-shi, Saitama 362-0021 (JP)
(74) Representative: Novagraaf Technologies
(86) International application number: PCT/JP2024/011219
(87) International publication number: WO 2024/203814

(57) **Abstract**

A solid electrolyte containing a lithium (Li) element, a sulfur (S) element, a phosphorous (P) element, a halogen (X) element, and a nitrogen (N) element. The molar ratio of the difference between the Li and S elements to the P element is 1.5 to 2.2. The molar ratio of the sum of the Li and X elements to the P element is preferably 7.1 to 10.0. The solid electrolyte preferably exhibits diffraction peaks at 2θ = 25.5° ± 1.0°, 29.8° ± 0.5°, and 31.2° ± 1.0° in a diffraction pattern measured by an X-ray diffractometer.

## Description

### Technical Field

The present invention relates to a solid electrolyte and a method for producing the same.

### Background Art

In recent years, secondary batteries have attracted attention as an approach to reduce CO₂ emissions and forestall global warming. Specifically, all-solid-state batteries using a sulfide solid electrolyte synthesized from, e.g., lithium sulfide have gathered interest. All-solid-state batteries using a sulfide solid electrolyte, which do not use flammable organic solvents, offer several advantages, including simpler safety equipment, lower production costs, and higher productivity. Additionally, because solid electrolytes of this type do not allow ion species other than lithium to migrate, thus eliminating the side reactions associated with anion movement. This is advantageous from the perspectives of safety and durability.

So far proposed solid electrolytes include sulfide electrolytes containing lithium, phosphorus, sulfur, and a halogen, as disclosed in patent literature 1 and 2 below.

### Citation List

### Patent Literature

Patent literature 1: US 2020/091552A1
Patent literature 2: US 2020/127325A1

### Summary of Invention

However, the presence of sulfur in sulfide electrolytes can render them susceptible to reactions with moisture, potentially leading to the generation of hydrogen sulfide, depending on the environmental conditions. Consequently, an objective of the present invention is to provide a solid electrolyte with reduced hydrogen sulfide generation.

As a result of intensive study, the inventors have found that a sulfide solid electrolyte with reduced sulfur and incorporated nitrogen exhibits suppression of hydrogen sulfide generation while retaining the performance properties of conventional solid electrolytes. The present invention has been completed on the basis of the above findings. The invention accomplishes the above object by providing a solid electrolyte comprising a lithium (Li) element, a phosphorous (P) element, a sulfur (S) element, a halogen (X) element, and a nitrogen (N) element, wherein a molar ratio of the difference between the Li and S elements to the P element ranges from 1.5 to 2.2, and a molar ratio of the sum of the Li and X elements to the P element ranges from 7.1 to 10.0.

The present invention also provides a method for producing a solid electrolyte comprising a lithium (Li) element, a phosphorous (P) element, a sulfur (S) element, a halogen (X) element, and a nitrogen (N) element, the method comprising a step of firing a starting composition of the solid electrolyte, and the starting composition comprising: at least one compound comprising at least one of a lithium (Li) element, a phosphorus (P) element, a sulfur (S) element, and a halogen (X) element; and an ammonium halide.

### Brief Description of Drawings

[Fig. 1] Fig. 1 presents X-ray diffraction (XRD) patterns of the solid electrolytes obtained in Examples 1 to 4 and Comparative Examples 1 and 3.
[Fig. 2] Fig. 2 shows XRD patterns of the solid electrolytes obtained in Example 5 and Comparative Example 2.
[Fig. 3] Fig. 3 displays an enlarged partial XRD pattern of the solid electrolyte obtained in Example 1 and an enlarged partial XRD pattern of the solid electrolyte obtained in Comparative Example 1.
[Fig. 4] Fig. 4 is a graph of the initial charge-discharge curves of the solid-state batteries having the solid electrolytes obtained in Examples 1 and 2.

### Description of Embodiments

The present invention will be described on the basis of its preferred embodiments. The solid electrolyte of the invention contains a lithium (Li) element, a phosphorous (P) element, a sulfur (S) element, a halogen (X) element, and a nitrogen (N) element. Namely, the solid electrolyte of the invention is a sulfide solid electrolyte.

The element X is at least one of fluorine (F), chlorine (Cl), bromine (Br) and iodine (I). From the standpoint of enhancement of Li-ion conductivity, the solid electrolyte may contain at least Cl or Br or both Cl and Br as a halogen (X).

The nitrogen-incorporated solid electrolyte of the present invention is able to prevent generation of hydrogen sulfide. Although the underlying mechanism has not been necessarily elucidated, the following assumption can be made. The incorporation of nitrogen appears to cause part of the P-S bonds of the sulfide solid electrolyte to be displaced by P-N bonds, thereby leading to a reduction in the sulfur content. As a result, the generation of hydrogen sulfide is prevented. Furthermore, when the solid electrolyte comes into contact with moisture, it is believed that the reaction between the P-N bond and the moisture occurs preferentially to the reaction between the P-S bond and the moisture. This also contributes to the reduction of hydrogen sulfide generation.

The nitrogen element may replace a part of the elements constituting a compound containing a Li element, a P element, a S element, and an X element. Alternatively, the nitrogen element may be present independently of the compound containing a Li element, a P element, a S element, and an X element. In view of the aforementioned mechanism, it is preferred that the nitrogen element replace a part of the elements constituting the compound containing a Li element, a P element, a S element, and an X element.

When the nitrogen is present independently of a solid electrolyte containing Li, P, S, and X, it can be in the form of a nitrogen-containing compound. The N-containing compound includes, but is not limited to, ammonium halides, such as ammonium chloride, ammonium bromide, and ammonium iodide. The solid electrolyte may contain one or more N-containing compounds. The N-containing compound is preferably ammonium chloride in terms of more effective performance of the battery having the solid electrolyte of the invention.

The solid electrolyte containing Li, S, P, and X is not particularly limited as long as it functions as a solid electrolyte and includes those known as sulfide solid electrolytes. Examples of the sulfide solid electrolyte include compounds represented by Li₂S-P₂S₅, Li₂S-P₂S₅-LiX, Li₂S-P₂S₅-P₂O₅, Li₂S-Li₃PO₄-P₂S₅, Li₃PS₄, Li₄P₂S₆, Li₁₀GeP₂Si₂, Li_{3.25}Ge_{0.25}P_{0.75}S₄, Li₇P₃S₁₁, Li_{3.25}P_{0.95}S₄, and LiₐPS_{b}X_{c} (a: a number of 3.0 to 6.0; b: a number of 3.5 to 4.8; and c: a number of 0.1 to 3.0).

The solid electrolyte of the present invention preferably has a molar ratio of the difference between Li and S to P, represented as (Li-S)/P, of 1.5 or greater, more preferably 1.6 or greater, and even more preferably 1.7 or greater. The (Li-S)/P value is preferably 2.2 or smaller, more preferably 2.0 or smaller, and even more preferably 1.8 or smaller. When the (Li-S)/P value is in the abovementioned range, the generation of hydrogen sulfide can be prevented more effectively. For example, in the case of a solid electrolyte having the compositional formula: Li₇₋ₓPS₆₋ₓXₓ, the (Li-S)/P molar ratio is calculated as {(7-x) - (6-x)}/1 = 1.

To ensure effective prevention of the hydrogen sulfide generation from the solid electrolyte, the solid electrolyte of the present invention preferably has a molar ratio of the sum of Li and X to P, represented as (Li+X)/P, of 7.1 or greater, more preferably 7.2 or greater, and even more preferably 7.25 or greater. For the same purpose, the (Li+X)/P value is preferably 10.0 or smaller, more preferably 8.5 or smaller, and even more preferably 7.6 or smaller. For example, in the case of a solid electrolyte having the compositional formula: Li₇₋ₓPS₆₋ₓXₓ, the (Li+X)/P molar ratio is calculated as {(7-x) + x}/1 = 7.

To ensure the effective prevention of the hydrogen sulfide generation from the solid electrolyte, the solid electrolyte of the present invention preferably has a sulfur to phosphorus molar ratio, S/P, of 2.0 or greater, more preferably 2.5 or greater, even more preferably 2.9 or greater, and yet more preferably 3.1 or greater. Appropriately increasing the sulfur content relative to the phosphorus content is effective in preventing the formation of P-S-P crosslinked structure, e.g., P₂S₇⁴⁻, whose chemical structure is highly reactive with water and prone to generate hydrogen sulfide gas, while promoting the formation of PS₄³⁻ units, which are less likely to generate hydrogen sulfide. On the other hand, the S/P value is preferably 4.5 or less, more preferably 4.0 or less, and even more preferably 3.5 or less. By properly controlling the sulfur content relative to the phosphorus content, the formation of S²⁻ not coordinated with phosphorus, which tends to be more reactive, is suppressed, and the formation of PS₄³⁻ units, which results in less hydrogen sulfide emission, is promoted.

To ensure the effective prevention of the hydrogen sulfide generation from the solid electrolyte, the solid electrolyte of the present invention preferably has a halogen to phosphorus molar ratio, X/P, of 1.5 or greater, more preferably 1.9 or greater, and even more preferably 2.2 or greater. In order to sufficiently enhance the Li-ion conductivity of the solid electrolyte, the X/P value is preferably 4.5 or less, more preferably 3.5 or less, even more preferably 2.8 or less, and yet more preferably 2.5 or less.

As stated, the solid electrolyte of the present invention contains nitrogen. Incorporating nitrogen into a solid electrolyte suppresses the emission of hydrogen sulfide. In order to produce this advantage more effectively, the solid electrolyte preferably has a nitrogen to phosphorus molar ratio (N/P) of 0.01 or more, more preferably 0.05 or more, even more preferably 0.06 or more, and yet more preferably 0.1 or more. To sufficiently increase the Li-ion conductivity of the solid electrolyte, the N/P value is preferably 0.5 or less, more preferably 0.4 or less, even more preferably 0.25 or less, and yet more preferably 0.2 or less. Consequently, the solid electrolyte of the present invention preferably has an N/P value of 0.01 to 0.5, more preferably 0.05 to 0.4, even more preferably 0.06 to 0.25, and yet more preferably 0.1 to 0.2.

The elemental composition of the solid electrolyte excluding N and S but including Li can be determined, for example, by ICP emission spectroscopy. The amount of N can be measured by an oxygen/nitrogen/hydrogen analyzer. The amount of S can be measured by the barium sulfate gravimetric method. The (Li-S)/P and (Li+X)/P molar ratios are derived from the measured amounts of the elements.

The solid electrolyte of the present invention may contain an element other than Li, P, S, X, and N. For example, part of the Li may be replaced by other alkali metal elements; part of the P may be replaced by other pnictogen elements; or part of the S may be replaced by other chalcogen elements, such as oxygen. The solid electrolyte of the invention may contain impurities provided that they do not affect the effects of the invention. The amounts of the impurities can be less than 5 mol%, preferably less than 3 mol%, and more preferably less than 1 mol%.

The solid electrolyte of the present invention may be either crystalline or non-crystalline, including glass ceramics or glass. The solid electrolyte which is crystalline preferably contains a crystal phase with an argyrodite crystal structure in terms of effective improvement of ionic conductivity. The argyrodite crystal structure is the crystal structure of a group of compounds derived from the mineral represented by the chemical formula: Ag₈GeS₆.

While conventional solid electrolytes containing a crystal phase with an argyrodite crystal structure are more likely to generate hydrogen sulfide than the other sulfide solid electrolytes, the solid electrolyte of the present invention exhibits suppression of hydrogen sulfide generation because of its decreased S content and increased X content to a greater extent than the conventional solid electrolytes. Thus, even when the solid electrolyte of the invention is of the type that contains a crystal phase with an argyrodite crystal structure, the suppressive effect on the generation of hydrogen sulfide is remarkable.

In order to ensure reduced generation of hydrogen sulfide generation, the solid electrolyte of the invention preferably shows diffraction peaks assigned to the crystal phase at 2θ = 25.5° ± 1.0°, 29.8° ± 0.5°, and 31.2° ± 1.0° in a diffraction pattern measured by XRD with CuKα1 radiation.

In order to ensure reduced generation of hydrogen sulfide generation, it is preferred that the characteristic peaks appear, in addition to these peaks, at 2θ = 44.7° ± 1.0°, 47.8° ± 1.0°, and 52.5° ± 1.0°.

To further ensure reduced generation of hydrogen sulfide, the solid electrolyte of the present invention preferably exhibits at least two peaks at 2θ = 25.5° ± 1.0° in a diffraction pattern measured by XRD with CuKα1 radiation. In this preferred embodiment, it is particularly preferable that the ratio of the peak intensity of the peak with the next highest intensity to that of the peak with the highest intensity among the at least two peaks at 2θ = 25.5° ± 1.0° (hereinafter also referred to as "peak intensity ratio") be 0.2 or higher. In the event of three peaks appearing at 2θ = 25.5° ± 1.0° with the peak intensity ratio of 0.2 or higher, and the three peaks are designated as peaks A, B, and C from the low angle side, the ratio of the peak intensity of the peak B to that of the peak A is preferably 2.0 or lower, more preferably 1.6 or lower, even more preferably 1.0 or lower, and yet more preferably 0.5 or lower.

The solid electrolyte of the present invention preferably has a particle size as represented in terms of D₅₀, the diameter at 50% of the cumulative volume in laser diffraction particle size distribution analysis, of 10 µm or smaller, more preferably 5 µm or smaller, even more preferably 3 µm or smaller, yet more preferably 1.5 µm or smaller, and still more preferably 1.0 µm or smaller. With the particle size within this range, increased contact points and area between the solid electrolyte and active material particles are provided. This leads to effectively improved input-output performance of the resulting batteries. The D₅₀ of the solid electrolyte is preferably 0.1 µm or greater, more preferably 0.3 µm or greater, and even more preferably 0.5 µm or greater. With the particle size in this range, an excessive increase in surface area of the solid electrolyte is avoided, so that an increase in resistance can be controlled. In addition, the solid electrolyte with this particle size is easily mixed with an active material.

The solid electrolyte of the present invention exhibits lithium-ion conductivity in its solid state. The Li-ion conductivity of the solid electrolyte of the invention is preferably at least 0.1 mS/cm, more preferably 0.5 mS/cm or more, and even more preferably 1.0 mS/cm or more, at room temperature (25°C).
The Li-ion conductivity can be measured, for example, by the following method. A sample for the measurement is prepared by uniaxially compressing a solid electrolyte to be tested into a pellet of 10 mm in diameter and approximately 1 to 8 mm in thickness at a pressure of approximately 6 t/cm² in a glove box purged with sufficiently dried argon gas (dew point: -60°C or lower). The Li-ion conductivity is measured by a Solartron 1255B, available from TOYO Corporation. The measurement is performed in accordance with the AC impedance method using conditions of a temperature of 25°C, with a frequency range of 100 Hz to 1 MHz, and an amplitude of 100 mV.

A preferred method for producing the solid electrolyte of the present invention, which contains a Li element, a P element, a S element, an X, element and a N element, will then be described. The synthesis of the solid electrolyte is preferably accomplished through a solid phase reaction by subjecting a starting composition to sintering. The starting composition is a mixture containing the aforementioned elements that constitute the solid electrolyte. The starting composition includes one or more compounds containing at least one of Li, P, S, and X and should contain an ammonium halide.

The compound can be, for example, a Li-containing compound, a S-containing compound, a P-containing compound, an X-containing compound, or a N-containing compound.

The compound may contain two or more elements selected from Li, P, S, X, and N. For example, the compound can be a compound containing Li and X, a compound containing P and S, a compound containing Li and S, a compound containing P and X, a compound containing S and X, or a compound containing N and X.
Examples of the compound containing Li and X include lithium halides. Examples of the compound containing P and S include phosphorus sulfides, such as diphosphorus trisulfide (P₂S₃) and diphosphorus pentasulfide (P₂S₅). Examples of the compound containing Li and S include lithium sulfide (Li₂S). Examples of the compound containing P and X include phosphorus halides, e.g., PX₃ and P₂X₅. Examples of the compound containing S and X include sulfur halides, including SX₂, SX₄, SX₆, and S₂X₁₀. Examples of the compound containing N and X include ammonium halides. Among the ammonium halides, ammonium chloride, ammonium bromide, and ammonium iodide are preferred to obtain a desired solid electrolyte successfully. Ammonium chloride is especially preferred.

To successfully synthesize the N-containing solid electrolyte, the starting composition preferably contains lithium sulfide, phosphorus sulfide, a lithium halide, and an ammonium halide.

In order to reduce hydrogen sulfide generation from the solid electrolyte, it is preferable to mix the compounds in a manner that results in a nitrogen-free elemental compositional formula: LiₐPS_{b}X_{c}. From this viewpoint, it is preferred for the subscript *a* to be 3.0 to 6.0, more preferably 4.0 to 5.5, and even more preferably 4.5 to 5.2; for the subscript b to be 2.0 to 4.8, more preferably 2.5 to 4.0, and even more preferably 3.0 to 3.4; and for the subscript c to be 1.5 to 4.5, more preferably 1.9 to 3.5, and even more preferably 2.2 to 2.5.

To reduce hydrogen sulfide generation from the solid electrolyte, it is also preferable to mix the compounds in a manner that results in a nitrogen-free elemental compositional formula: Li₇₋ₓPS₆₋ₓXₓ. From this viewpoint, it is preferred for the subscript x to be greater than 1.0 and not greater than 3.0, more preferably 1.4 to 2.6, and even more preferably 1.8 to 2.2.

The starting composition is prepared by mixing the compounds described above using, for example, an attritor, a paint shake, a planetary ball mill, a ball mill, a bead mill, or a homogenizer. The amounts of the compounds to be mixed together are adjusted as appropriate so as to result in a desired solid electrolyte composition.

The resulting starting composition is subjected to a firing process, whereby a solid phase reaction occurs to yield a crystalline fired product. The firing atmosphere can be an inert gas atmosphere, such as an argon atmosphere or a nitrogen atmosphere, or a hydrogen sulfide atmosphere. An inert gas atmosphere is preferred to reduce the amount of sulfur in the solid electrolyte.

The firing temperature is preferably at least 200°C, more preferably 300°C or higher, even more preferably 350°C or higher, and yet more preferably 400°C or higher, to ensure the solid phase reaction of the starting composition. From the point of view of industrial production feasibility and cost effectiveness, the firing temperature is preferably 700°C or lower, more preferably 600°C or lower, and even more preferably 550°C or lower.

The firing time is not critical as long as a fired product with a desired composition is obtained. Specifically, the firing time should be such that the solid phase reaction of the starting composition occurs sufficiently. The firing time can be 30 minutes or longer, 2 hours or longer, or 3 hours or even longer, and 10 hours or shorter or 5 hours or shorter.

It should be noted that the elemental composition of the fired product may differ from the theoretical composition based on the composition of the starting composition because the sulfur of the sulfide(s) present in the starting composition may react with the hydrogen of the ammonium halide to produce hydrogen sulfide.

After the firing, the fired product may be disintegrated or ground if necessary, and then may be classified as required. The disintegration or grinding may preferably be performed using a grinder, such as a planetary ball mill, a vibrating mill, or a tumbling mill, or a kneader.

The thus prepared solid electrolyte is useful either alone or in combination with other solid electrolytes.

The solid electrolyte of the present invention is used as a material constituting a solid electrolyte layer, a positive electrode layer, or a negative electrode layer. Specifically, the solid electrolyte of the invention is used in a battery including a positive electrode layer, a negative electrode layer, and a solid electrolyte layer interposed between the positive and the negative electrode layer, namely a solid-state battery. More specifically, it can be used in lithium solid-state batteries, which can be either primary or secondary and may assume any shape, including laminate film, cylindrical, prismatic, and so forth. As used herein, the term "solid-state" encompasses not only an all-solid-state configuration wherein neither liquid nor gel is used as the electrolyte but also a semi-solid-state configuration wherein the electrolyte contains no more than 50, 30, or 10 mass% of liquid or gel materials as the electrolyte.

When the solid electrolyte of the present invention is incorporated in a solid electrolyte layer, the solid electrolyte layer can be formed, for example, by forming a coating layer on a substrate by a method including dropwise applying a slurry containing the solid electrolyte, a binder, and a solvent to the substrate and removing the excess slurry, for example, by doctor-blading, a method including bringing the slurry into contact with the substrate and removing the excess slurry by air-knifing, or by a screen printing method, and removing the solvent from the coating layer by heat drying. The solid electrolyte layer can also be formed by compressing the solid electrolyte in powder form using a press and appropriately processing the resulting compressed mass.
The thickness of the solid electrolyte layer is typically preferably 5 to 300 µm, more preferably 10 to 100 µm, in view of the balance between short-circuit prevention and volume capacity density.

The solid electrolyte of the present invention constitutes an electrode mixture together with an active material. The proportion of the solid electrolyte in the electrode mixture typically ranges from 10 to 50 mass%. If necessary, the electrode mixture may contain other materials, such as a conductive agent.
The electrode mixture is mixed with a binder and a solvent to prepare paste, which is applied to a current collector, such as aluminum foil, and dried to form an electrode, including a positive and a negative electrode.

As the positive electrode material forming the positive electrode layer, any positive electrode material used in lithium-ion batteries as a positive electrode active material may be used as appropriate. Examples of suitable positive electrode materials include Li-containing positive electrode active materials, including spinel type lithium transition metal oxides and lithium metal oxides having a layer structure. Using a high-voltage positive electrode material as a positive electrode material is effective for the improvement of energy density. The positive electrode material may contain a conductive agent or other materials, in addition to the positive electrode active material.

As the negative electrode material forming the negative electrode layer, any negative electrode material used in Li-ion batteries as a negative electrode active material may be used as appropriate. The solid electrolyte of the present invention is electrochemically stable. This allows to use, as a negative electrode material, lithium metal or a carbonaceous material (e.g., graphite, artificial graphite, natural graphite, or non-graphitizing carbon [i.e., hard carbon]) which charges and discharges at a low potential comparable to lithium metal (approximately 0.1 V vs. Li+/Li), thereby enhancing the energy density of the solid-state batteries. Silicon or tin, which are promising high-capacity materials, can also be used as an active material. The negative electrode material may contain a conductive agent or other materials in addition to the negative electrode active material.

The following clauses are further descriptive of the disclosed present invention, including the solid electrolyte, electrode mixture, electrode, battery, and method for producing the solid electrode.
1. A solid electrolyte comprising a lithium (Li) element, a phosphorous (P) element, a sulfur (S) element, a halogen (X) element, and a nitrogen (N) element,
   wherein a molar ratio of the difference between the Li and S elements to the P element ranges from 1.5 to 2.2, and
   a molar ratio of the sum of the Li and X elements to the P element ranges from 7.1 to 10.0.
2. The solid electrolyte of clause 1, exhibiting diffraction peaks at 2θ = 25.5° ± 1.0°, 29.8° ± 0.5°, and 31.2° ± 1.0° in a diffraction pattern, the diffraction pattern being measured by an X-ray diffractometer.
3. The solid electrolyte of clause 1 or 2, exhibiting diffraction peaks at 2θ = 44.7° ± 1.0°, 47.8° ± 1.0°, and 52.5° ± 1.0° in a diffraction pattern the diffraction pattern being measured by an X-ray diffractometer.
4. The solid electrolyte of any one of clauses 1 to 3, exhibiting at least two peaks at 2θ = 25.5° ± 1.0° in an X-ray diffraction pattern.
5. The solid electrolyte of any one of clauses 1 to 4, wherein the molar ratio of the N element to the P element is 0.01 to 0.5.
6. An electrode mixture containing the active material according to any one of clauses 1 to 5, a solid electrolyte, and a conductive agent.
7. An electrode containing the electrode mixture of clause 6 and a binder.
8. A battery comprising a positive electrode layer, a negative electrode layer, and a solid electrolyte layer located between the positive electrode layer and the negative electrode layer and containing the solid electrolyte of any one of clauses 1 to 5.
9. A method for producing a solid electrolyte comprising a lithium (Li) element, a phosphorous (P) element, a sulfur (S) element, a halogen (X) element, and a nitrogen (N) element,
   the method comprising a step of firing a starting composition of the solid electrolyte, and
   the starting composition comprising:
      at least one compound comprising at least one of a lithium (Li) element, phosphorus (P) element, sulfur (S) element, and halogen (X) element; and an ammonium halide.
10. The method of clause 9, wherein the starting composition comprises the at least one compound comprising lithium sulfide, phosphorus sulfide, and a lithium halide.
11. The method of clause 9 or 10, wherein the starting composition comprises the ammonium halide comprising ammonium chloride.

### Example

The present invention will now be illustrated in greater detail with reference to Examples, but it should be understood that the invention is not limited thereto.

### Comparative Example 1

### (1) Preparation of starting composition

Lithium sulfide (Li₂S) powder, diphosphorus pentasulfide (P₂S₅) powder, lithium chloride (LiCl) powder, and lithium bromide (LiBr) powder were weighed and mixed so as to result in the mass ratio shown in Table 1 below. Heptane was added to the mixed powder to prepare a slurry. The slurry was transferred into a zirconia container and placed on a planetary ball mill. Zirconia balls with a diameter of 5 mm were used as a grinding medium. The ball mill was operated at 100 rpm for 10 hours to carry out wet mixing. The resulting slurry was vacuum dried at room temperature to give a starting composition devoid of heptane.

### (2) Firing

The starting composition was fired using a tubular electric furnace. During the firing process, a stream of 100% pure nitrogen gas was directed into the furnace. The firing was performed for a total duration of 10.5 hours by raising the temperature to 300°C at a rate of 200°C/h, maintaining this temperature for 4 hours, raising the temperature to 500°C at 200°C/h, and maintaining this temperature for 4 hours.

### (3) Grinding

The fired product was disintegrated in a mortar, followed by sieving through openings of 250 µm. The resulting product was ground together with heptane in a planetary ball mill using zirconia balls with a diameter of 5 mm as a grinding medium. The ball mill was operated at 100 rpm for 3 hours. The resulting slurry was vacuum dried at room temperature to give a solid electrolyte powder devoid of the solvent.

### Examples 1 to 3

Lithium sulfide (Li₂S) powder, diphosphorus pentasulfide (P₂S₅) powder, lithium chloride (LiCl) powder, lithium bromide (LiBr) powder, and ammonium chloride (NH₄Cl) powder were weighed and mixed so as to result in the mass ratio shown in Table 1. A solid electrolyte powder was obtained in otherwise the same manner as in Comparative Example 1.

### Example 4

Lithium sulfide (Li₂S) powder, diphosphorus pentasulfide (P₂S₅) powder, lithium chloride (LiCl) powder, lithium bromide (LiBr) powder, lithium iodide (LiI) powder, and ammonium chloride (NH₄Cl) powder were weighed and mixed so as to result in the mass ratio shown in Table 1. A solid electrolyte powder was obtained in otherwise the same manner as in Comparative Example 1.

### Comparative Example 2

Lithium sulfide (Li₂S) powder, diphosphorus pentasulfide (P₂S₅) powder, lithium chloride (LiCl) powder, and lithium bromide (LiBr) powder were weighed and mixed so as to result in the mass ratio shown in Table 1. A solid electrolyte powder was obtained in otherwise the same manner as in Comparative Example 1.

### Example 5

Lithium sulfide (Li₂S) powder, diphosphorus pentasulfide (P₂S₅) powder, lithium chloride (LiCl) powder, lithium bromide (LiBr) powder, and ammonium chloride (NH₄Cl) powder were weighed and mixed so as to result in the mass ratio shown in Table 1. A solid electrolyte powder was obtained in otherwise the same manner as in Comparative Example 1.

### Comparative Example 3

This comparative example was intended to reduce hydrogen sulfide generation by lowering the S/P molar ratio with a solid electrolyte containing Li, P, S, and X but not N.

Lithium sulfide (Li₂S) powder, diphosphorus pentasulfide (P₂S₅) powder, lithium chloride (LiCl) powder, and lithium bromide (LiBr) powder were weighed and mixed so as to result in the mass ratio shown in Table 1. A solid electrolyte powder was obtained in otherwise the same manner as in Comparative Example 1.

### Evaluation

The solid electrolytes obtained in Examples and Comparative Examples were subjected to elemental analyses according to the methods described below to calculate the molar ratios as shown in Table 1.

To determine Li, P, Br, Cl, and I, the solid electrolyte powder was melted by alkali fusion and subjected to elemental analysis with an ICP emission spectrometer SP3520DDUV from Hitachi High-Tech Corp. For the determination of S, S was once oxidized to sulfate ions and then determined by the barium sulfate gravimetric method. The determination of N was carried out using an oxygen/nitrogen/hydrogen analyzer EMGA930 from Horiba, Ltd., wherein the solid electrolyte powder was melted in a graphite crucible, the generated gas was deprived of CO₂ and H₂O using a CO₂ adsorber and a H₂O absorber, and the thus extracted N₂ was determined in a thermal conductivity detector.

The amount of generated hydrogen sulfide and the particle size D₅₀ were measured by the method below. The performance of solid-state batteries containing the solid electrolytes was evaluated by the following method. All the results obtained are listed in Table 1.

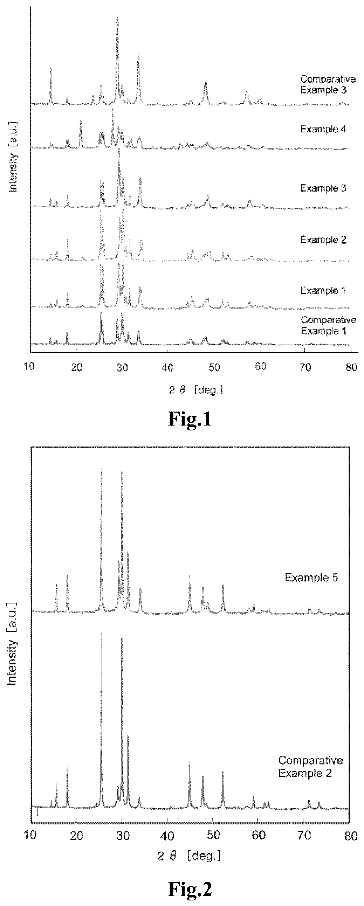

The solid electrolytes obtained in Examples and Comparative Examples were analyzed by XRD to obtain diffraction patterns. The XRD analysis was conducted using an X-ray diffractometer Smart Lab SE from Rigaku Corp. under a non-atmospheric exposure condition. The measurement conditions were: a scan axis of 2θ/θ, a measurement range of 2θ = 10°-120°, a step size of 0.02°, a scan rate of 1°/min, a CuKα1 radiation, a tube voltage of 40 kV, and a tube current of 80 mA. The resulting diffraction patterns are shown in Figs. 1 and 2.

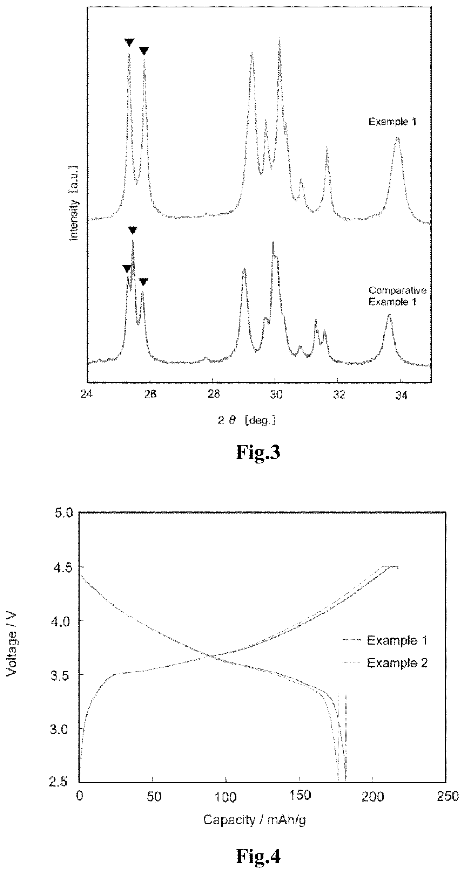

For each solid electrolyte, the number of peaks among the peaks appearing at 2θ = 25.5° ± 1.0° with a peak intensity ratio (the ratio of the peak intensity of the peak with the next highest intensity to that of the peak with the highest intensity) of 0.2 or higher is shown in Table 1. When there are three peaks at 2θ = 25.5° ± 1.0°, the peak B/peak A intensity ratio is shown in Table 1. These peak intensities were calculated using the average intensity in the 2θ range of 75.5° to 76.0° as the background. In Fig. 3, the peaks counted under the above-described conditions in Example 1 and Comparative Example 1 are marked with ▼. In the diffraction pattern of the solid electrolyte of Example 5, diffraction peaks were observed at 2θ = 25.5° ± 1.0°, 29.8° ± 0.5°, 31.2° ± 1.0°, 44.7° ± 1.0°, 47.8° ± 1.0°, and 52.5° ± 1.0°, but two or more peaks were not observed at 2θ = 25.5° ± 1.0°.

### Hydrogen sulfide generation

The amount of hydrogen sulfide emitted from the solid electrolyte was measured by detector tubes 4LL from Gastech Corp.

In a glove box purged with sufficiently dried argon gas (dew point: -60°C or lower), 2 mg of the solid electrolyte was weighed in a metal container and sealed in a laminate film bag. A 1000 mL glass separable flask was placed in a constant temperature and humidity chamber filled with air mixed with dried air so as to have a dew point of -30°C. The flask was left in the chamber until the internal atmosphere of the separable flask became the same as that of the chamber. Subsequently, the sealed bag containing the solid electrolyte was opened in the chamber, the solid electrolyte was placed in the separable flask quickly, and the separable flask was closed. The hydrogen sulfide emitted until an elapse of 30 minutes immediately after the flask closure was measured by the detector.

### Particle size D₅₀

A sample delivery controller Microtrac SDC (from Nikkiso Co., Ltd.) for a laser diffraction particle size analyzer was used. A sample slurry of the solid electrolyte was ultrasonicated at 30 W for 60 seconds while being delivered at a flow rate of 50% in Microtrac SDC. The particle size distribution of the sample slurry was then determined using a laser diffraction particle size analyzer MT3000II from Nikkiso. The particle diameter D₅₀, which is the particle diameter at 50% in the resulting cumulative volume-based distribution, was obtained.

### Battery performance

Lithium niobate-coated LiNi_{0.6}Co_{0.2}Mn_{0.2}O₂ (NCM) powder, which is a ternary layered compound, was used as a positive electrode active material. Graphite powder was used as a negative electrode active material. Each of the solid electrolytes obtained in Examples 1 and 2 which were finely ground in a planetary ball mill (D₅₀: 0.7 m) was used as a solid electrolyte powder.

A positive electrode mixture was prepared by mixing the positive electrode active material powder, the solid electrolyte powder, and a conductivity aid in a mass ratio of 60:37:3 in a mortar, and the mixture was uniaxially compressed at 20 MPa to form a positive electrode mixture pellet. A negative electrode mixture was prepared by mixing the graphite powder and the solid electrolyte powder in a mass ratio of 64:36 in a mortar.

The lower end of a polypropylene cylinder with an inner diameter of 10.5 mm and a height of 18 mm was clogged with a SUS-made positive electrode, the pellet of the positive electrode mixture was placed on the positive electrode, and the solid electrolyte powder was placed on the pellet. The contents of the cylinder were uniaxially pressed at 180 MPa to form a positive electrode mixture combined with a solid electrolyte layer. The negative electrode mixture powder was placed on the solid electrolyte layer, thereby forming an all-solid-state battery cell having a three-layer structure composed of the positive electrode mixture, the solid electrolyte layer with a thickness of approximately 300 µm, and the negative electrode mixture with a thickness of approximately 20 µm.

Battery performance (initial charge-discharge characteristics) of the all-solid-state battery cell was evaluated by placing the cell in an environmental test chamber maintained at 25 °C and connecting it to a charge-discharge testing system. The charge-discharge process was conducted using a current of 1 mA, defined as 1C. The cell was charged to 4.5 V at 0.1C using a CC-CV protocol to determine the initial charge capacity. Discharge was performed at 0.1C down to 2.5 V under a CC regime to obtain the initial discharge capacity. The initial charge-discharge curves of Examples 1 and 2 are shown in Figure 4.

**Table 1**

| | Starting Composition (mass%) | | | | | | Molar Ratio (Quantitative Determination Results) | | | | | | | | Presence of N | H₂S Generation (ppm) | D₅₀ (µm) | Diffr. Peaks* | |
|---|---|---|---|---|---|---|---|---|---|---|---|---|---|---|---|---|---|---|---|
| | Li₂S | P₂S₅ | LiCl | LiBr | NH₄Cl | Lil | Li/P | S/P | Cl/P | Br/P | I/P | N/P | (Li-S)/P | (Li+X)/P | | | | Number of Peaks** | Peak B/ Peak A |
| Comp. Ex. 1 | 22.3 | 35.9 | 13.7 | 28.1 | 0.0 | 0.0 | 4.99 | 3.66 | 0.97 | 0.98 | 0.00 | 0.00 | 1.33 | 6.94 | no | 6 | 2.0 | 3 | 1.4 |
| Ex. 1 | 20.8 | 33.6 | 12.8 | 26.3 | 6.5 | 0.0 | 5.01 | 3.21 | 1.40 | 1.00 | 0.00 | 0.14 | 1.80 | 7.41 | yes | 0 | 2.2 | 2 | - |
| Ex. 2 | 21.4 | 34.5 | 15.8 | 21.6 | 6.6 | 0.0 | 4.94 | 3.18 | 1.54 | 0.78 | 0.00 | 0.15 | 1.76 | 7.26 | yes | 0 | 1.9 | 2 | - |
| Ex. 3 | 20.2 | 32.6 | 12.4 | 25.4 | 9.4 | 0.0 | 4.96 | 3.00 | 1.56 | 0.98 | 0.00 | 0.18 | 1.96 | 7.50 | yes | 0 | 2.1 | 2 | - |
| Ex. 4 | 18.5 | 29.9 | 8.0 | 16.3 | 5.7 | 21.6 | 4.96 | 3.29 | 1.10 | 0.70 | 0.58 | 0.10 | 1.67 | 7.34 | yes | 0 | 3.4 | 3 | 1.0 |
| Comp. Ex. 2 | 28.9 | 36.8 | 11.2 | 23.0 | 0.0 | 0.0 | 5.44 | 4.13 | 0.80 | 0.79 | 0.00 | 0.00 | 1.31 | 7.03 | no | 19 | 1.5 | 1 | - |
| Ex. 5 | 27.0 | 34.4 | 10.5 | 21.5 | 66 | 0.0 | 5.70 | 3.98 | 1.26 | 0.85 | 0.00 | 0.09 | 1.72 | 7.81 | yes | 13 | 1.9 | 1 | - |
| Comp. Ex. 3 | 18.7 | 37.6 | 14.3 | 29.4 | 0.0 | 0.0 | 4.30 | 3.17 | 0.99 | 0.96 | 0.00 | 0.00 | 1.13 | 6.24 | no | 2.5 | 1.6 | 3 | 1.3 |

| | | | | | | | | | | | | | | | | | | | |
|---|---|---|---|---|---|---|---|---|---|---|---|---|---|---|---|---|---|---|---|
| *: At 2θ = 25.5° ± 1.0° **: Peaks with a peak intensity ratio of 0.2 or greater | | | | | | | | | | | | | | | | | | | |

As evidenced by the results in Table 1, the solid electrolytes obtained in Examples exhibit suppressed hydrogen sulfide generation.

It is seen from the graph of Fig. 4, the initial charge capacity and discharge capacity of Example 1 were 217.4 mAh/g and 182.2 mAh/g, respectively, and those of Example 2 were 211.4 mAh/g and 176.8 mAh/g, respectively. These results prove that the solid electrolytes of Examples sufficiently function as a solid electrolyte.

### Industrial Applicability

As described above, the present invention provides a solid electrolyte with reduced hydrogen sulfide generation and a method for producing the same.

## Claims

1. A solid electrolyte comprising a lithium (Li) element, a phosphorous (P) element, a sulfur (S) element, a halogen (X) element, and a nitrogen (N) element,
wherein a molar ratio of the difference between the Li and S elements to the P element ranges from 1.5 to 2.2, and
a molar ratio of the sum of the Li and X elements to the P element ranges from 7.1 to 10.0.

2. The solid electrolyte of claim 1, exhibiting diffraction peaks at 2θ = 25.5° ± 1.0°, 29.8° ± 0.5°, and 31.2° ± 1.0° in a diffraction pattern, the diffraction pattern being measured by an X-ray diffractometer.

3. The solid electrolyte of claim 2, exhibiting diffraction peaks at 2θ = 44.7° ± 1.0°, 47.8° ± 1.0°, and 52.5° ± 1.0° in a diffraction pattern the diffraction pattern being measured by an X-ray diffractometer.

4. The solid electrolyte of claims 2, exhibiting at least two peaks at 2θ = 25.5° ± 1.0° in an X-ray diffraction pattern.

5. An electrode mixture comprising the active material according to any one of claims 1 to 4, a solid electrolyte, and a conductive agent.

6. An electrode comprising the electrode mixture according to claim 5 and a binder.

7. A battery comprising a positive electrode layer, a negative electrode layer, and a solid electrolyte layer located between the positive electrode layer and the negative electrode layer and containing the solid electrolyte according to any one of claims 1 to 4.

8. A method for producing a solid electrolyte comprising a lithium (Li) element, a phosphorous (P) element, a sulfur (S) element, a halogen (X) element, and a nitrogen (N) element,
the method comprising a step of firing a starting composition of the solid electrolyte, and
the starting composition comprising:
at least one compound comprising at least one of a lithium (Li) element, a phosphorus (P) element, a sulfur (S) element, and a halogen (X) element;
and
an ammonium halide.

9. The method of claim 8, wherein the starting composition comprises the at least one compound comprising lithium sulfide, phosphorus sulfide, and a lithium halide.

10. The method of claim 8 or 9, wherein the starting composition comprises the ammonium halide comprising ammonium chloride.
